(19) Europäisches Patentamt
European Patent Office
Office européen des brevets

(11) **EP 1 340 717 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(51) Int Cl.:
***C01G 49/08*** *(2006.01)*

(21) Anmeldenummer: **03003563.8**

(22) Anmeldetag: **17.02.2003**

(54) **Verfahren zur Herstellung von Magnetitteilchen und deren Verwendung**

Method for preparing magnetite particles and uses of said particles

Procédé de production de particules de magnétite et leurs utilisations

(84) Benannte Vertragsstaaten:
**AT BE BG CH CY CZ DE DK EE ES FI FR GB GR HU IE IT LI LU MC NL PT SE SI SK TR**

(30) Priorität: **01.03.2002 DE 10209150**

(43) Veröffentlichungstag der Anmeldung:
**03.09.2003 Patentblatt 2003/36**

(73) Patentinhaber: **LANXESS Deutschland GmbH**
**51369 Leverkusen (DE)**

(72) Erfinder: **Meisen, Ulrich, Dr.**
**53925 Kall (DE)**

(56) Entgegenhaltungen:
**EP-A- 0 279 626    EP-A- 0 422 755**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft ein Verfahren zur Herstellung von Magnetitteilchen und deren Verwendung.

Teilchenförmige Magnetite, die durch ein Fällverfahren aus wässrigen Lösungen hergestellt werden, sind seit langem bekannt. In US-A 802 928 wird bereits die Herstellung von Magnetit durch Fällung von Eisen-II-sulfat mit einer alkalischen Komponente und anschließender Oxidation mit Luft beschrieben. In zahlreichen weiteren, nachfolgenden Druckschriften wird ebenfalls die Herstellung von Magnetiten nach dem Fällungsverfahren beschrieben.

Die Herstellung von Magnetiten nach dem Fällungsverfahren unter Zusatz von Silicium wird in JP-A 51 044 298 beschrieben. Reine Fällungsmagnetite ohne Zusatz von Fremdelementen können nach DE-A 3 209 469 diskontinuierlich oder nach DE-A 2 618 058 kontinuierlich hergestellt werden. Normalerweise wird $FeSO_4$ als Eisen-II-salz eingesetzt.

Es ist jedoch auch möglich zur Herstellung eines Magnetits nach dem Fällungsverfahren jegliches lösliche Eisen-II-salz einzusetzen. Insbesondere kommt hier der Einsatz von $FeCl_2$, wie in DE-A 3 004 718 beschrieben, in Frage. Der Einsatz von $Fe-SO_4$ oder $FeCl_2$ hat den Vorteil, dass beide Stoffe in großen Mengen sehr preiswert als Abfallstoffe von der eisenverarbeitenden Industrie bezogen werden können. Als Fällungsmittel kommt neben dem am häufigsten eingesetzten Natriumhydroxid auch CaO oder $CaO_3$ (DE-A 3 004 718), Ammoniak (DE-A 2 460 493) oder $Na_2CO_3$, $MgCO_3$ oder MgO (EP-A 0 187 331) in Frage. Als Oxidationsmittel wird in der Regel Luft eingesetzt. Es werden jedoch auch Verfahren zur Oxidation mit Nitraten (DD-A 216 040 und DD-A 284 478) beschrieben.

Die Magnetite fanden zunächst zur Herstellung von Farben aller Art Anwendung. Der besondere Vorteil von Magnetiten gegenüber organischen Farbstoffen und Ruß liegt in ihrer sehr viel besseren Wetterbeständigkeit, so dass Farben mit Magnetit auch im Außenbereich angewendet werden können.

Weiterhin werden Fällungsmagnetite gern zur Einfärbung von Betonformteilen, wie z.B. Betonpflastersteinen oder Betondachsteinen eingesetzt.

Seit geraumer Zeit werden Magnetite auch in der Elektrofotografie zur Herstellung von Tonern verwendet. Zur Herstellung der Toner für Kopiergeräte mit Einkomponententonern werden bevorzugt Magnetite, die nach dem Fällungsverfahren hergestellt wurden, eingesetzt. Der hierfür eingesetzte magnetische Toner muss verschiedene Eigenschaften aufweisen. Mit fortschreitender Entwicklung und Verbesserung der Kopiergeräte und Drucker wurden die Anforderungen an den magnetischen Toner und folglich an den hierfür verwendeten Magnetit immer höher. Die neueste Druckergeneration erreicht eine Auflösung von mehr als 400 dpi (Punkte pro Zoll), wozu die Entwicklung feinteiliger Toner mit sehr enger Teilchengrößenverteilung erforderlich war. Dies hatte zur Folge, dass die hierfür verwendeten Magnetite ebenfalls eine sehr enge Teilchengrößenverteilung aufweisen müssen. Weiterhin ist eine bestimmte Teilchengröße erforderlich, so dass eine homogene Verteilung der Magnetitteilchen im fertigen Toner gewährleistet ist. Die Magnetite selbst müssen einen ausreichend hohen elektrischen Widerstand haben, um das latente Bild während der elektrostatischen Übertragung zu stabilisieren. Weiterhin müssen Koerzitivkraft, Sättigungsmagnetisierung und vor allem die remanente Magnetisierung im richtigen Verhältnis zu den in der Maschine herrschenden Feldstärken sein.

Für die Anwendung in magnetischen Tonern werden besonders häufig Si-haltige Magnetite eingesetzt. Diese haben ein anderes Ladungsverhalten als reine Magnetite und weisen bei gleicher Teilchengröße eine höhere thermische Stabilität auf. Ein Verfahren zur Herstellung derartiger Teilchen wird in JP-A 61 034 070 beschrieben. Hierbei wird die Si-Komponente zum Eisen-II-sulfat gegeben, was allerdings zu Ausfällungen von Kieselsäure und damit zu einer ungleichmäßigen Verteilung des Siliziums im Magnetitgitter führt. In US-A 4 992 191 wird ein Magnetit mit 0,1 bis 5,0 Atom-% Si bezogen auf Fe beschrieben, der für die Herstellung von Tonern besonders geeignet sein soll.

In dem dort beschriebenen Verfahren wird zu einer alkalischen Komponente in Form einer wässrigen Lösung eine Silikatkomponente gegeben und dann einer Eisen (II)-Komponente in Form einer wässrigen Lösung in einer Menge zugegeben, dass ein Molverhältnis von Fe (II)-Kontponente zu alkalischer Komponente von rund

$$0{,}53 \left[ \frac{1{,}5}{2{,}85} \right]$$

vorliegt, wobei die Temperatur auf 90°C gehalten wird. Die so erhaltene Suspension wird dann mit Luft als Oxidationsmittel behandelt, um sphäroidischen, siliciumhaltigen Magnetit mit einer Teilchengröße im Bereich von 0,1 bis 1,0 $\mu$m zu erhalten. Die erhaltenen Partikel werden filtriert, gewaschen und gemahlen.

In DE-A 19 702 431 wird ein weiteres Verfahren zur Herstellung besonders runder Si-haltiger Magnetite beschrieben. Dort wird erstmals auch ausführlich in einem Vergleichsbeispiel die Herstellung Si-freier runder Magnetite beschrieben. Die Thermostabilität dieser Magnetite wird jedoch als nicht ausreichend für die Herstellung von magnetischen Tonern beschrieben.

Der vorliegende Erfindung lag die Aufgabe zugrunde, ein Verfahren zur Herstellung runder Si-armer Magnetite (Si-Gehalt weniger als 0,025 Gew.-%) zu entwickeln, die für neu entwickelte Kopierer und Laserdrucker besonders geeignet sind. In der aktuellen Generation Kopierer und Laserdrucker werden zunehmend Magnetite mit höheren Koerzitivkräften (3979 bis 7162 A/m = 40 bis 90 Oe) gefordert. Durch den Einsatz Si-armer Magnetite, kann das Ladungsverhalten unabhängig vom Magnetit mit Ladungsadditiven eingestellt werden. Die Fließeigenschaften des mit derartigen Magnetiten hergestellten Toners können ebenfalls mit Fließverbesserern (typischerweise feinteiliges Siliciumdioxid) unabhängig vom inhärenten Fließverhalten des Magnetits eingestellt werden.

Überraschenderweise wurde gefunden, dass die in DE-A 19 702 431 als nicht ausreichend temperaturstabil beschriebenen Magnetite sehr wohl in Tonern eingesetzt werden können. Darüber hinaus wird das Herstellungsverfahren durch den Wegfall der das Si einbringenden Komponente, wodurch auch ein Verfahrensschritt entfällt, kostengünstiger.

Diese Aufgabe konnte mit den Magnetiten gemäß dem erfindungsgemäßen Verfahren gelöst werden. Diese Magnetite können nicht nur in magnetischen Tonern eingesetzt werden, sondern auch zur Einfärbung von Papier, Kunststoff, Lacken, Fasern und Beton und in Farben verwendet werden.

Die erfindungsgemäß einsetzbaren Magnetite sind erhältlich, durch ein Verfahren bestehend aus den Schritten:

a) Vorlegen einer alkalischen Komponente in Form einer wässrigen Lösung unter Schutzgas,

b) Aufheizen der alkalische Komponente auf eine Temperatur von 30 bis 90°C, vorzugsweise auf 60 bis 90°C,

c) Zugeben einer Eisen-Komponente in Form einer wässrigen Lösung in einer Menge, so dass ein Molverhältnis von Fe-komponente zu einem Äquivalent alkalischer Komponente von 0,48 bis 0,6 vorliegt, und wobei die Temperatur auf 30 bis 90°C, vorzugsweise 60 bis 90°C, gehalten wird und der Fe-III-Gehalt der Fe-Komponente 0,2 bis 1,5 mol-% Fe-III beträgt,

d) Aufheizen der unter c) erhaltene Suspension fakultativ auf eine Temperatur von 60 bis 100°C, bevorzugt 70 bis 90°C, wobei diese Temperatur höher als die unter c) genannte Temperatur sein muss,

e) Behandeln der unter c) erhaltene Suspension mit einem Oxidationsmittel, bis ein Fe-III-Gehalt von mehr als 65 mol-% in der Eisenverbindung vorliegt,

f) nach der Oxidation unter e) fakultativ erneute Zugabe unter Schutzgas eine alkalische Komponente in Form einer wässrigen Lösung zu der in e) erhaltenen Suspension in einer Menge, dass ein Molverhältnis von unter c) eingesetztem Fe zu einem Äquivalent insgesamt eingesetzter, alkalischer Komponente von 0,42 bis 0,47, bevorzugt 0,44 bis 0,46, erhalten wird,

g) Erwärmen der nach f) erhaltene Suspension auf 50 bis 100°C, vorzugsweise 60 bis 90°C,

h) Zugeben einer Fe-Komponente in Form einer wässrigen Lösung in einer Menge, so dass sich ein in der Suspension gemessener pH-Wert von 6 bis 8 einstellt,

i) Oxidieren mit einem Oxidationsmittel bis zu einem Fe-III-gehalt in der Eisenverbindung von mehr als 65 mol-%, bezogen auf Eisengehalt, und dann

j) Filtrieren und waschen des Rückstandes, Trocknen und Mahlen,

k) gegebenenfalls vor der Trocknung Nachbehandeln des Produktes.

Die Teilchengröße und Teilchenform der Magnetite kann durch den Fällungs-pH-Wert gesteuert werden. Fällt man die Magnetite im Bereich des FeII/NaOH-Verhältnisses von mehr als 0,48, so erhält man zunehmend runde Teilchen, die sich durch niedrige Remanenz und Koerzitivkraft auszeichnen. Weiterhin sind diese Teilchen generell, im Vergleich mit den bei anderen pH-Werten hergestellten Magnetiten, relativ feinteilig. Durch eine Verringerung der Fälltemperatur, also der Temperatur, bei der die Eisen-Komponente und die alkalische Komponente (auch Fällungsmittel genannt) gemischt werden, können besonders feine Teilchen hergestellt werden. Weiterhin ist es möglich die Feinteiligkeit durch gezielten Zusatz von Fe-III zur Fe-II-Komponente zu steuern. Aus US-A 4 975 214 ist die Herstellung feinteiliger Si-haltiger Magnetite (0,5 bis 20 m$^2$/g BET-Oberfläche) durch Einstellen des Fe-III-Gehalts auf 1,666 bis 2,5 mol % bekannt. Allgemein bekannt aus DE-A 3 500 471 ist die Einstellung der Teilchengröße von Fällungsmagnetiten durch den Fe-III-Gehalt. Der genaue Bereich, der zur Herstellung der erfindungsgemäßen Teilchen erforderlich ist, nämlich 0,2 bis 1,5 mol-% Fe-III, ist aus oben genannten Schriften nicht ableitbar.

Durch Zugabe von Natronlauge nach Beendigung der ersten Oxidation, weiterer Zugabe von Eisen in Form eines wasserlöslichen Eisen-II-salzes und erneuter Oxidation gelingt es diese feinteiligen Magnetite bei Bedarf zu vergröbern. Hierdurch wird die Thermostabilität verbessert. Eine weitere Verbesserung der Thermostabilität kann durch Nachbehandlung mit organischen oder anorganischen Substanzen erzielt werden. Hier werden vorzugsweise anorganische Al, Si, Ti, Mg, Ce, La oder Zr-Verbindungen eingesetzt, die beim Auffällen dichte Hydroxid oder Oxyhydroxydschichten bilden. Besonders bevorzugt ist jedoch der Zusatz von organischen Nachbehandlungsmitteln wie Polysiloxanen oder Ti-Estern.

Als alkalische Komponente kann vorzugsweise ein Alkalimetallhydroxid, ein Erdalkalimetallhydroxid, ein Erdalkalimetalloxid, ein Alkalimetallcarbonat, $MgCO_3$ oder Ammoniak eingesetzt werden. Als Eisen-II-komponente wird vorzugsweise ein wasserlösliches Fe-II-salz eingesetzt, besonders bevorzugt Eisensulfat oder Eisendichlorid. Es ist jedoch auch möglich andere wasserlösliche Fe-II-Verbindungen einzusetzen, insbesondere wenn diese zu vergleichbaren Preisen zur Verfügung stehen. Als Oxidationsmittel können vorzugsweise Luftsauerstoff, reiner Sauerstoff, $H_2O_2$, Chlor, Alkalimetallchlorate (z.B. $NaOCl$, $NaClO_3$, $NaClO_4$) oder Nitrate eingesetzt werden. Aus wirtschaftlichen Gründen werden besonders bevorzugt Luftsauerstoff, reiner Sauerstoff, $H_2O_2$ oder Natriumnitrat eingesetzt.

Eine besonders bevorzugte Ausführangsform des erfindungsgemäßen Verfahrens soll im folgenden näher beschrieben werden:

> Natronlauge mit einem Gehalt von 300 g NaOH pro Liter Wasser wird in einem diskontinuierlichen Rührkessel unter Rühren und Schutzgasdurchleitung vorgelegt.

Anschließend wird auf eine Temperatur zwischen 30 und 100°C, bevorzugt zwischen 60 und 90°C, aufgeheizt. Ist diese Temperatur erreicht, so wird mit der Dosierung der Fe-II-Komponente begonnen. Der Fe-III-Gehalt der Fe-II-Komponente beträgt 0,2 bis 1,5 mol% Fe-III. Die Berechnung der Fe-II-Komponente erfolgt über das angestrebte Verhältnis NaOH/Fe-II. Wird beispielsweise ein NaOH/Fe-II-Verhältnis von 0,55 angestrebt und werden 100 mol NaOH vorgelegt, so müssen 100*0,55 = 55 mol Fe-II-Komponente zugegeben werden. Der Berechnung des Alkalimetallhydroxid/Fe-II-Verhältnisses liegt die Gleichung

$$Fe^{2+} + 2NaOH \rightarrow Fe(OH)_2 + 2 Na^+ \quad Fe\text{-}II/NaOH = 0{,}50$$

zugrunde. Wird eine alkalische Komponente eingesetzt, die in einem anderen stöchiometrischen Verhältnis mit der Fe-II-komponente zu $Fe(OH)_2$ oder $FeCO_3$ reagiert, so ist das Verhältnis entsprechend zu verändern. Dieser Fall tritt z.B. bei der Verwendung von Carbonaten oder Erdkalimetallhydroxiden oder -oxiden auf, so dass sich in diesen Fällen folgende Gleichung ergibt:

$$Fe^{2+} + Ca(OH)_2 \rightarrow Fe(OH)_2 + Ca^{2+} \quad Fe\text{-}IIICa(OH)_2: 1{,}0$$

oder

$$Fe^{2+} + Na_2CO_3 \rightarrow FeCO_3 + 2 Na^+ \quad Fe\text{-}II/Na_2CO_3: 1{,}0.$$

Nachdem die Zugabe der berechneten Menge der Fe-II-Komponente beendet ist, wird gegebenenfalls nochmals auf 60 bis 100°C aufgeheizt. In vielen Fällen sind die Temperatur unter b) und die Temperatur unter c) identisch, so dass ein nochmaliger Aufheizschritt in c) nicht erforderlich ist. Ist die Temperatur erreicht, so wird die Schutzgasbegasung beendet und mit der Zugabe des Oxidationsmittels begonnen. Im Falle einer Luftbegasung wird Luft über eine Begasungsvorrichtung unterhalb des Rührers eingeleitet. Andere technische Ausführungsformen der Luftbegasung, wie z.B. Zweistoffdüsen, Injektoren, Ejektoren oder Einleiten in Rohrleitungen mit statischen Mischern, sind ebenfalls möglich. Die pro Stunde zugeführte Luftmenge beträgt zwischen 0,5 und 15 l/h pro mol Fe-II.

Die Berechnung der anderen Oxidationsmittel erfolgt entsprechend den Redoxäquivalenten der jeweiligen Oxidationsmittel. Es ist zu beachten, dass nur maximal 66,6 % des Fe-II für die Herstellung von Magnetit oxidiert werden müssen.

Die Oxidation ist vorzugsweise beendet, wenn ein Fe-III-Gehalt von mehr als 65 mol-% erreicht ist. Dies kann durch Redoxtitration festgestellt werden.

Im Anschluss an die erste Oxidation (Schritte a) bis e)) können diese Schritte abermals durchgeführt werden. Eine alkalische Komponente wird unter Rühren und Schutzgasdurchleitung der Suspension aus e) zugegeben. Die erforderliche Menge alkalischer Komponente berechnet sich wie oben angegeben aus dem hier erforderlichen Fe-IIINaOH-Verhältnis. Danach wird die Fe-II-Komponente solange zugegeben, bis sich in der Suspension ein pH-Wert zwischen 6 und 8 einstellt. Nach Zugabe dieser Menge an Fe-II-Komponente wird die Schutzgasdurchleitung abgestellt und erneut mit der Oxidation begonnen.

Nach Abschluss der zweiten Oxidation wird das Produkt filtriert, gewaschen und getrocknet. Vor der Trocknung kann das Produkt zur Verbesserung der Thermostabilität und der Dispergierbarkeit nachbehandelt werden. Hierzu wird vorzugsweise ein Polysiloxan oder organischer Ti-Ester eingesetzt.

Die nach dem erfindungsgemäßen Verfahren hergestellten Magnetite bzw. die erfindungsgemäßen Magnetite lassen sich besonders vorteilhaft für die Herstellung von Tonern, von Druckfarben und von Farbpasten für Tintenstrahldrucker, einsetzen. Die Messung der Eigenschaften der Magnetite erfolgt nach den nachfolgenden Methoden:

1. Die Magnetwerte (Koerzitivkraft, spezifische Sättigungsmagnetisierung, spezifische remanente Magnetisierung) werden am Magnetometer der Fa. Bayer (bei 5000 Oe Feldstärke (entspr. 397,9 A · m$^{-1}$)) gemessen.

2. Die BET-Oberfläche wird nach DIN 66 131 gemessen:

Gasgemisch: 90 % He, 10 % $N_2$; Messtemperatur: 77,4 K;

Ausheizen bei 140°C, 60 Minuten.

3. Elementanalyse für Si und Mn:

Si wird spektralanalytisch durch ICP-OES bestimmt. Mn wird durch Atomabsorptionsspektroskopie bestimmt.

4. Elementanalyse für Fe (gesamt), Fe-II und Fe-III:

Bestimmungen nach DIN 55 913: Der Fe-II-Gehalt wird durch Titration mit $KMnO_4$ mittels eines Memotitrators (Mettler DL-70) ermittelt. Fe-III wird analog mit $TiCl_3$ bestimmt. Der Gesamteisengehalt wird aus den beiden Einzelwerten und der Einwaage errechnet. Die Bestimmung der Gehalte der beiden Maßlösungen erfolgt täglich.

5. Teilchenform und Teilchengröße:

Abschätzung der Teilchengröße und -form aus einer transmissionsmikroskopischen (TEM) Aufnahme bei einer 30.000-fachen Vergrößerung.

6. Die Sphärizität wird mittels Bildanalyse anhand einer TEM-Aufnahme mit 30 000-facher Vergrößerung bestimmt. Die Auswertung erfolgt nach der Formfaktormethode mittels eines automatischen Bildanalysesystems (IBAS, Fa. Zeiss). Hierbei gibt das Verhältnis minimaler Durchmesser zu maximaler Durchmesser eines Teilchens den Formfaktor. Je näher dieser Wert bei 1,0 liegt, um so runder ist ein Teilchen.

7. Der pH-Wert des Magnetitpulvers wird nach ISO-EN 787 Teil 9 bestimmt.

Die Erfindung soll anhand der nachfolgenden Beispiele näher erläutert werden.

**Beispiele**

**Beispiel 1**

In einen Rührkessel von 30 Liter Nutzvolumen wurden 6 423 g Natronlauge mit einem Gehalt von 316,2 g/l, was 40 mol NaOH entspricht, gegeben. Nach Einschalten der Stickstoffbegasung und des Rührers wurde die Natronlauge auf 30°C aufgeheizt. In 66 Minuten wurden nun 14,736 Liter Eisen-II-sulfatlösung mit einem Gehalt von 216,48 g/l Fe als $FeSO_4$ berechnet (21 mol Fe) und einem Fe-III-Gehalt von 0,25 mol-% Fe-III, zugepumpt. Das $FeSO_4$/NaOH-Verhältnis betrug 0,525. Dann wurde die Stickstoffbegasung abgestellt und mit 25 l/h Luft über einen unter dem Rührer angebrachten Begasungsring begast. Die Begasung wurde abgebrochen, nachdem ein Fe-III-Gehalt von 66 mol-% erreicht war.

Nach Beendigung der Oxidation wurde die Suspension filtriert, mit vollentsalztem Wasser gründlich gewaschen und bei 40°C unter Luft getrocknet. Das erhaltene Pulver wurde in einer Prallmühle gemahlen.

Der erhaltene Magnetit hatte folgende Eigenschaften:

| Si-Gehalt | : | 0,017 Gew.-% |
|---|---|---|
| Koerzitivkraft | : | 6134 A/m = 77 Oe |
| Sättigungsmagnetisierung | : | 1142 Gem$^3$/g = 114,2 nTcm$^3$/g |

(fortgesetzt)

| | | |
|---|---|---|
| Remanenz | : | 160 Gem$^3$/g = 16 nTcm$^3$/g |
| Teilchengröße | : | 0,2 $\mu$m |
| DIN-pH-Wert | : | 8,4 |
| BET-Oberfläche | : | 9,8 m$^2$/g |

**Beispiel 2**

In einen Rührkessel von 100 m$^3$ Nutzvolumen wurden 6 400 kg NaOH als Lösung mit einem Gehalt von 300 g/l, was 160 kmol NaOH entspricht, gegeben. Nach Einschalten der Stickstoffbegasung und des Rührers wurde die Natronlauge auf 90°C aufgeheizt. In 64 Minuten wurden nun 50,2 m$^3$ Eisen-II-sulfatlösung mit einem Gehalt von 254,4 g/l, was 84,05 kmol Fe-II entsprach, zugepumpt. Die Fe-II-sulfatlösung hatte einen Fe-III-Gehalt von 1,24 mol-%. Das FeSO$_4$/NaOH-Verhältnis betrug 0,525. Dann wurde die Stickstoffbegasung abgestellt und mit 200 m$^3$/h Luft über einen unter dem Rührer angebrachten Begasungsring begast. Die Begasung wurde abgebrochen, nachdem ein Fe-III-Gehalt von 67 mol-% erreicht war.

Nach Beendigung dieser Reaktion wurde die Suspension filtriert, mit vollentsalztem Wasser gründlich gewaschen und bei 110°C Abgastemperatur sprühgetrocknet. Das erhaltene Pulver wurde in einer Prallmühle gemahlen. Das erhaltene Produkt hatte folgende Eigenschaften:

| | | |
|---|---|---|
| Si-Gehalt | : | 0,02 Ges.-% |
| Koerzitivkraft | : | 61 Oe = 4860 A/m |
| Sättigungsmagnetisierung | : | 1108 Gem$^3$/g = 110,8 nTcm$^3$/g |
| Remanenz | : | 129 Gem$^3$/g =13 nTcm$^3$/g |
| Teilchengröße | : | 0,2 $\mu$m |
| BET-Oberfläche | : | 8,6 m$^2$/g |
| DIN-pH-Wert | : | 7,4 |

**Patentansprüche**

1. Verfahren zur Herstellung eines sphärischen Si-armen Magnetits mit einem Silicium-Gehalt von weniger als 0,025 Gew.-%, einer Teilchengröße wie aus elektronenmikroskopischen Aufnahmen ermittelt von 0,1 bis 0,5 $\mu$m, einer BET-Oberfläche von 3 bis 13 m$^2$/g, einem DIN-pH-Wert (am aufgeschlämmten Pulver gemessen) von 4 bis 9 und einer Koerzitivkraft von 3979 bis 7162 A/m (50 bis 90 Oe), bestehend aus den Schritten

   a) Vorlegen einer alkalische Komponente in Form einer wässrigen Lösung unter Schutzgas,
   b) Aufheizen der alkalischen Komponente auf eine Temperatur von 30 bis 90°C, vorzugsweise auf 60 bis 90°C,
   c) Zugabe einer Eisen(II)-komponente, wobei die Eisen(II)komponente einen Fe-III-Gehalt von 0,2 bis 1,5 mol-% Fe-III aufweist, in Form einer wässrigen Lösung in einer Menge, so dass ein Molverhältnis von Fe-(II)-komponente zu einem Äquivalent alkalischer Komponente von 0,48 bis 0,6 vorliegt, und wobei die Temperatur auf 30 bis 90°C, vorzugsweise 60 bis 90°C, gehalten wird,
   d) fakultativ Aufheizen der unter c) erhaltenen Suspension auf eine Temperatur von 60 bis 100°C, bevorzugt 70 bis 90°C, wobei diese Temperatur höher als die unter c) genannte Temperatur sein muss,
   e) Behandeln der unter c) oder d) erhaltenen Suspension mit einem Oxidationsmittel, bis ein Fe-III-Gehalt von mehr als 65 mol-% in der Eisenverbindung vorliegt,
   f) fakultativ nach der Oxidation unter e) erneute Zugabe unter Schutzgas einer alkalischen Komponente in Form einer wässrigen Lösung zu der in e) erhaltenen Suspension in einer Menge, dass ein Molverhältnis von unter c) eingesetztem Fe zu einem Äquivalent insgesamt eingesetzter, alkalischer Komponente von 0,42 bis 0,47, bevorzugt 0,44 bis 0,46, erhalten wird,
   g) Erwärmen der nach f) erhaltenen Suspension auf 50 bis 100°C, vorzugsweise 60 bis 90°C,
   h) Zugeben einer Fe(II)-komponente in Form einer wässrigen Lösung in einer Menge zu der Suspension aus g), so dass sich ein in der Suspension gemessener pH-Wert von 6 bis 8 einstellt,
   i) Oxidieren der Reaktionsmischung aus h) mit einem Oxidationsmittel bis zu einem Fe-III-gehalt in der Eisenverbindung von mehr als 65 mol-%, bezogen auf Eisengehalt, und dann
   j) Filtrieren der Suspension aus e) oder i) und Waschen des Rückstandes, Trocknen und Mahlen,
   k) gegebenenfalls vor der Trocknung Nachbehandeln des Produktes.

**2.** Verfahren gemäß Anspruch 1, **dadurch gekennzeichnet, dass** als alkalische Komponente Ammoniak, Alkalimetallhydroxide, Erdalkalimetallhydroxide, Erdalkalimetalloxide oder Alkalimetallcarbonate eingesetzt werden.

**3.** Verfahren gemäß Anspruch 1, **dadurch gekennzeichnet, dass** als Eisen-II-komponente Eisensulfat oder Eisendichlorid eingesetzt wird.

**4.** Verfahren gemäß Anspruch 1, **dadurch gekennzeichnet, dass** als Oxidationsmittel Luftsauerstoff, $H_2O_2$, Chlor, Alkalimetallchlorate oder Nitrat eingesetzt wird.

**5.** Verwendung der nach Ansprüchen 1 bis 4 hergestellten Magnetite für Toner und Druckfarben.

**6.** Verwendung der nach Ansprüchen 1 bis 4 hergestellten Magnetite zur Einfärbung von Beton, Lacken, Kunststoffen, Papier und Dispersionsfarben.

**Claims**

**1.** Process for the preparation of a spherical low-Si magnetite having a silicon content of less than 0.025% by weight, a particle size, as determined from electron micrographs, of 0.1 to 0.5 $\mu$m, a BET surface area of 3 to 13 m$^2$/g, a DIN pH (measured on the suspended powder) of 4 to 9 and a coercive force of 3979 to 7162A/m (50 to 90 Oe), consisting of the steps of

a) initially introducing an alkaline component in the form of an aqueous solution under an inert gas,
b) heating the alkaline component to a temperature of 30 to 90°C, preferably to 60 to 90°C,
c) adding an iron(II) component, the iron(II) component having an Fe(III) content of 0.2 to 1.5 mol% of Fe(III), in the form of an aqueous solution in an amount such that a molar ratio of Fe(II) component to one equivalent of alkaline component of 0.48 to 0.6 is present, and the temperature being kept at 30 to 90°C, preferably 60 to 90°C,
d) optionally heating the suspension obtained under c) to a temperature of 60 to 100°C, preferably 70 to 90°C, it being necessary for this temperature to be higher than the temperature mentioned under c),
e) treating the suspension obtained under c) or d) with an oxidizing agent until an Fe(III) content of more than 65 mol% is present in the iron compound,
f) optionally, after the oxidation under e), adding an alkaline component in the form of an aqueous solution again under inert gas to the suspension obtained in e), in an amount such that a molar ratio of Fe used under c) to one equivalent of total alkaline component used of 0.42 to 0.47, preferably 0.44 to 0.46, is obtained,
g) heating the suspension obtained after f) to 50 to 100°C, preferably 60 to 90°C,
h) adding an Fe(II) component in the form of an aqueous solution in an amount to the suspension from g) such that a pH, measured in the suspension, of 6 to 8 is established,
i) oxidizing the reaction mixture from h) with an oxidizing agent to an Fe(III) content in the iron compound of more than 65 mol%, based on iron content, and then
j) filtering the suspension from e) or i) and washing the residue, drying and milling,
k) optionally before the drying, aftertreating the product.

**2.** Process according to Claim 1, **characterized in that** ammonia, alkali metal hydroxides, alkaline earth metal hydroxides, alkaline earth metal oxides or alkaline earth metal carbonates are used as the alkaline component.

**3.** Process according to Claim 1, **characterized in that** iron sulphate or iron dichloride is used as the iron(II) component.

**4.** Process according to Claim 1, **characterized in that** atmospheric oxygen, $H_2O_2$, chlorine, alkali metal chlorates or a nitrate is used as the oxidizing agent.

**5.** Use of the magnetites prepared according to any of Claims 1 to 4 for toners and printing inks.

**6.** Use of the magnetites prepared according to any of Claims 1 to 4 for colouring concrete, finishes, plastics, paper and emulsion paints.

**Revendications**

1. Procédé pour la préparation d'une magnétite sphérique pauvre en Si présentant une teneur en silicium inférieure à 0,025% en poids, une grosseur de particules telle que déterminée à partir de clichés pris au microscope électronique de 0,1 à 0,5 μm, une surface BET de 3 à 13 m$^2$/g, une valeur de pH selon DIN (mesurée sur la poudre mise en suspension) de 4 à 9 et une force coercitive de 3979 à 7162 A/m (50 à 90 Oe), constitué par les étapes

   a) disposition au préalable d'un composant alcalin sous forme d'une solution aqueuse sous gaz protecteur,
   b) chauffage du composant alcalin à une température de 30°C à 90°C, de préférence de 60°C à 90°C,
   c) addition d'un composant de fer (II), le composant de fer (II) présentant une teneur en Fe III de 0,2 à 1,5% en mole de Fe III, sous forme d'une solution aqueuse en une quantité telle que le rapport molaire du composant de fer (II) à un équivalent de composant alcalin est de 0,48 à 0,6, et la température étant maintenue à 30°C jusqu'à 90°C, de préférence à 60°C jusqu'à 90°C,
   d) chauffage facultatif de la suspension obtenue au point c) à une température de 60 à 100°C, de préférence de 70 à 90°C, où cette température est supérieure à la température mentionnée au point c),
   e) traitement de la suspension obtenue au point c) ou d) avec un oxydant, jusqu'à ce qu'il existe une teneur en Fe III de plus de 65% en mole dans le composé de fer,
   f) après l'oxydation du point e), facultativement, nouvelle addition sous gaz protecteur d'un composant alcalin sous forme d'une solution aqueuse à la suspension obtenue au point e) en une quantité telle qu'on obtient un rapport molaire de Fe utilisé au point c) à un équivalent de composant alcalin utilisé au total de 0,42 à 0,47, de préférence de 0,44 à 0,46,
   g) chauffage de la suspension obtenue selon f) à 50 jusqu'à 100°C, de préférence à 60 jusqu'à 90°C,
   h) addition à la suspension du point g) d'un composant de Fe (II) sous forme d'une solution aqueuse en une quantité telle qu'il se règle un pH mesuré dans la suspension de 6 à 8,
   i) oxydation du mélange réactionnel du point h) avec un oxydant jusqu'à une teneur en Fe III dans le composé de fer de plus de 65% en mole, par rapport à la teneur en fer, puis
   j) filtration de la suspension du point e) ou i) et lavage du résidu, séchage et broyage,
   k) le cas échéant, avant le séchage, post-traitement du produit.

2. Procédé selon la revendication 1, **caractérisé en ce qu'**on utilise comme composant alcalin de l'ammoniaque, des hydroxydes de métal alcalin, des hydroxydes de métal alcalino-terreux, des oxydes de métal alcalino-terreux ou des carbonates de métal alcalin.

3. Procédé selon la revendication 1, **caractérisé en ce qu'**on utilise comme composant de fer II du sulfate de fer ou du dichlorure de fer.

4. Procédé selon la revendication 1, **caractérisé en ce qu'**on utilise comme oxydant de l'oxygène de l'air, H$_2$O$_2$, du chlore, des chlorates de métal alcalin ou du nitrate.

5. Utilisation des magnétites préparées selon les revendications 1 à 4 pour des toners et des encres d'impression.

6. Utilisation des magnétites préparées selon les revendications 1 à 4 pour la coloration de béton, de laques, de matériaux synthétiques, de papier et d'encres de dispersion.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 802928 A
- JP 51044298 A
- DE 3209469 A
- DE 2618058 A
- DE 3004718 A
- DE 2460493 A
- EP 0187331 A
- DD 216040 A
- DD 284478 A
- JP 61034070 A
- US 4992191 A
- DE 19702431 A
- US 4975214 A
- DE 3500471 A